# FASCICULE DE BREVET EUROPEEN

(11) **EP 2 801 178 B1**
(45) Date de publication et mention de la délivrance du brevet: **27.01.2021**
(21) Numéro de dépôt: 12815740.1
(22) Date de dépôt: 13.12.2012
(51) Int. Cl.: H04L 29/06, H04M 3/42

(54) **PROCÉDÉ DYNAMIQUE DE DÉTERMINATION D'UNE LISTE DE SERVICES DANS UN RÉSEAU SIP**
DYNAMISCHES VERFAHREN ZUR BESTIMMUNG EINER LISTE VON DIENSTEN IN EINEM SIP-NETZWERK
DYNAMIC METHOD FOR DETERMINING A LIST OF SERVICES IN AN SIP NETWORK

(30) Priorité: 03.01.2012 FR 1250050
(43) Date de publication de la demande: 12.11.2014
(73) Titulaire: ORANGE, 75015 Paris (FR)
(72) Inventeur: COADIC, Thibaut, F-75018 Paris (FR); CLEUZIOU, Olivier, F-94200 Ivry Sur Seine (FR); TOSSOU, Bruno, F-91230 Montgeron (FR)
(86) Numéro de dépôt international: PCT/FR2012/052930
(87) Numéro de publication internationale: WO 2013/102716

(56) Documents cités:
- US-A1- 2009 093 241
- "Telecommunications and Internet converged Services and Protocols for Advanced Networking (TISPAN); IMS-based IPTV stage 3 specification", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. TISPAN 3, no. V3.5.2, 1 mars 2011 (2011-03-01), XP014065520,
- JOACHIM POETZL MARTIN HUELSEMANN DEUTSCHE TELEKOM JEAN-MARIE STUPKA SIEMENS: "Extensions to the Session Initiation Protocol (SIP) for the support of the Call Completion Services for the European Telecommunications Standards Institute; draft-poetzl-sipping-call-completion-02.tx t", 20070201, no. 2, 1 février 2007 (2007-02-01), XP015050311, ISSN: 0000-0004
- "Digital cellular telecommunications system (Phase 2+); Universal Mobile Telecommunications System (UMTS); LTE; IP Multimedia Subsystem (IMS); Stage 2 (3GPP TS 23.228 version 10.6.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V10.6.0, 1 October 2011 (2011-10-01), XP014068094,

## Description

La présente invention concerne les réseaux de télécommunications de type IP (« *Internet Protocol* »), et notamment ceux parmi les réseaux IP qui sont aptes à mettre en œuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP utilisant le protocole de contrôle de session SIP (initiales des mots anglais « Session *Initiation Protocol »* signifiant « Protocole d'Initiation de Session »), désigné ci-après par « réseau SIP », pour permettre à un utilisateur de ce réseau de découvrir de façon dynamique, c'est-à-dire lors de l'enregistrement sur le réseau ou subséquemment, les services auxquels il a effectivement accès.

On dira qu'un dispositif-client (« *User Equipment* » en anglais) « appartient » au réseau d'un opérateur donné, appelé ci-dessous « réseau-opérateur », lorsque l'utilisateur de ce dispositif-client possède un compte auprès de cet opérateur, et ce, quel que soit le réseau d'accès utilisé par le dispositif-client pour se connecter au réseau-opérateur. Ces dispositifs-clients peuvent par exemple être un terminal fixe ou mobile, ou une passerelle domestique (« *Residential Gateway* » en anglais) ou située dans une entreprise, ou encore une passerelle d'opérateur réseau *(« Voice Gateway* » en anglais) telle qu'un DSLAM-SIP (DSLAM sont les initiales des mots anglais « *Digital Subscriber Line Access Multiplexer »* signifiant « Multiplexeur d'Accès de Lignes d'Abonnés Numériques » ; il s'agit d'un dispositif collectant le trafic de données DSL qui transite sur un certain nombre de lignes téléphoniques).

Le protocole SIP a été défini par l'IETF dans le document RFC 3261. Ce protocole permet l'établissement, la modification et la terminaison de sessions multimédia dans un réseau utilisant le protocole IP. Le protocole SIP a ensuite été étendu par l'IETF dans plusieurs autres documents RFC, ajoutant de nouvelles fonctionnalités au protocole SIP.

Le protocole SIP est utilisé en particulier dans les infrastructures de type IMS (initiales des mots anglais « *IP Multimedia Subsystem »* signifiant « Sous-système Multimédia sur IP »). L'IMS est défini par l'organisme de normalisation 3GPP (« *3rd Generation Partnership Project* »). C'est une architecture de réseau introduite initialement pour les réseaux mobiles, puis étendue à d'autres accès, dont les accès fixes à technologie xDSL. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en œuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont il gère aussi l'interaction.

Lorsqu'un utilisateur souhaite bénéficier des services offerts par un réseau IMS, il émet vers le réseau des messages de signalisation pouvant inclure notamment divers types de requêtes.

Tout d'abord, le dispositif-client de l'utilisateur doit, sauf exceptions (cas de certains appels d'urgence), s'enregistrer sur le réseau. Lorsque le réseau est incapable de faire le lien entre cet enregistrement et un enregistrement précédent (par exemple suite à une panne réseau, ou suite à un arrêt du dispositif-client pendant une durée supérieure à une valeur prédéterminée), l'enregistrement est considéré comme étant un enregistrement initial. Après un enregistrement initial, le dispositif-client de l'utilisateur doit envoyer périodiquement au réseau une requête pour confirmer qu'il souhaite maintenir son enregistrement.

Pour pouvoir donc enregistrer les dispositifs-clients, les réseaux IMS comprennent un ou plusieurs serveurs, généralement appelés « S-CSCF » (initiales des mots anglais « *Serving* - *Call Session Control Function* » signifiant « Fonction de Commande de Session d'Appel Serveuse »), aptes (entre autres fonctions) à gérer la procédure d'enregistrement des dispositifs connectés au réseau.

En outre, ces réseaux comprennent un ou plusieurs serveurs, généralement appelés « I-CSCF » (initiales des mots anglais *« Interrogating* - *Call Session Control Function* » signifiant « Fonction de Commande de Session d'Appel Interrogatrice ») - d'ailleurs souvent combinés physiquement avec les serveurs de type S-CSCF pour constituer des serveurs dénotés « I/S-CSCF » - qui, au moment de l'enregistrement d'un dispositif-client, interrogent un serveur appelé « HSS » (initiales des mots anglais « *Home Subscriber Service* » signifiant « Service d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'utilisateur. Les serveurs HSS contiennent chacun une base de données-clients, et sont donc l'équivalent dans les réseaux IMS des serveurs « HLR » (initiales des mots anglais « Home *Location Register* » signifiant « Registre de Localisation Nominal ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services souscrits.

Enfin, en périphérie du réseau IMS peuvent se trouver un ou plusieurs serveur(s) IBCF (initiales des mots anglais « *Interconnection Border Controller Function* » signifiant « Fonction de Commande de Frontière d'Interconnexion ») : il s'agit de serveurs SIP situés à la bordure du réseau IMS et mettant en œuvre les traitements spécifiques nécessaires, le cas échéant, pour réaliser une interconnexion avec un autre réseau SIP. Cette fonction IBCF est souvent réalisée par un équipement de type SBC (initiales des mots anglais « Session Border Controller » signifiant « Commande de Session en Bordure ») ou I-SBC.

Dans le cadre d'un réseau et de services utilisant le protocole de contrôle de session SIP, le choix de services auxquels peut avoir accès un utilisateur à un instant donné dépend de différents facteurs.

Ainsi, ce choix dépend de l'offre de services à laquelle l'utilisateur a souscrit. Il dépend aussi du dispositif-client utilisé par l'utilisateur et des caractéristiques techniques de celui-ci : en effet, le dispositif-client peut donner l'illusion qu'il peut invoquer des services auxquels l'utilisateur n'a en fait pas droit, ou inversement ne pas permettre à l'utilisateur d'utiliser certains services auxquels il a pourtant dûment souscrit.

Ce choix dépend également des différents réseaux intermédiaires utilisés pour mettre en relation le dispositif-client et le réseau-opérateur. Par exemple, en situation de mobilité, la connectivité d'accès peut être assurée par un premier réseau, par exemple un réseau local au pays visité par l'utilisateur. De même, ce premier réseau peut ne pas être directement connecté au réseau-opérateur, de sorte que l'utilisation d'au moins un réseau de transit supplémentaire est nécessaire. Or chacun de ces réseaux peut avoir des caractéristiques techniques propres, et ces réseaux peuvent ne pas tous posséder les moyens pour fournir les services auxquels pourrait avoir accès l'utilisateur s'il était directement connecté à son réseau-opérateur. Quand bien même ces réseaux possèderaient individuellement de tels moyens, il se peut que les opérateurs qui les gèrent n'aient pas conclu les accords d'interconnexion préalables nécessaires à la mise en œuvre de bout en bout de certaines des caractéristiques techniques requises pour que l'utilisateur puisse faire plein usage de son offre de services.

Il y a un double enjeu à ce que le dispositif-client de l'utilisateur et le réseau-opérateur puissent déterminer quels sont les services effectivement accessibles à l'utilisateur :
- pour le dispositif-client, il s'agit d'éviter de restituer à l'utilisateur une information erronée, afin d'éviter que celui-ci ne tente d'invoquer des services qui ne pourront être honorés, ce qui causerait à la fois du trafic inutile dans le réseau et un risque d'incompréhension et de mécontentement chez l'utilisateur ;
- pour le réseau-opérateur, il s'agit d'éviter d'adresser au dispositif-client des requêtes vouées à l'échec, ce qui causerait une consommation inutile de ressources.

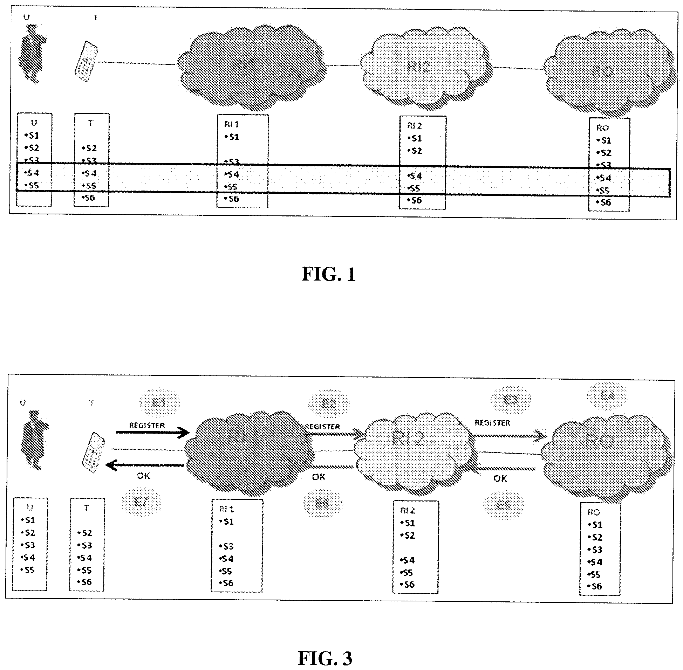

Ce problème est illustré sur la **figure 1****.** Sur cette figure, un utilisateur (noté « U » sur la figure) a souscrit aux services S1, S2, S3, S4 et S5 auprès de son opérateur de service. Le dispositif-client (noté « T » sur la figure) qu'il utilise pour se connecter au réseau possède les moyens pour fournir les services S2, S3, S4, S5 et S6. L'utilisateur est en déplacement dans un pays étranger, et il utilise le réseau d'un opérateur local au pays qu'il visite (réseau noté « RI1 » sur la figure) comme réseau intermédiaire pour se connecter au réseau-opérateur (noté « RO » sur la figure). RI1 possède les moyens pour fournir les services S1, S3, S4, S5 et S6. Or RI1 ne dispose d'aucune connexion directe avec le réseau-opérateur RO, et utilise un réseau de transit (noté « RI2 » sur la figure) pour joindre le réseau-opérateur RO. Ce réseau intermédiaire RI2 possède les moyens pour fournir tous les services S1, S2, S3, S4, S5 et S6, mais l'accord d'interconnexion entre le intermédiaire RI2 et le réseau-opérateur RO ne prévoit pas la compatibilité avec le service S3. Au final, seuls S4 et S5 sont accessibles à l'utilisateur U, mais ce dernier pensera, sur la base des indications de compatibilité fournies par T, que les services S2, S3, S4, S5 et S6 lui sont accessibles, et risque de tenter en vain l'utilisation des services S2, S3 et S6. De même, le réseau-opérateur RO pensera que les services S2, S3, S4 et S5 sont accessibles, alors que l'émission vers T de requêtes relatives aux services S2 et S3 conduira à un échec.

Il existe dans l'état de l'art différents procédés permettant à un dispositif-client d'acquérir des informations sur les services qui lui sont accessibles.

Ainsi, selon la norme TS 183 063 de l'ETSI (European Telecommunications Standards Institute) (cf. notamment la Section 5.3.1.1 et l'Annexe A.4.1), un utilisateur enregistré auprès d'un réseau IMS peut présenter auprès de ce réseau une requête de fourniture de services (« *service packages and broadcast services* ») liés à la réception de chaînes de télévision *via* Internet (IPTV) ; le réseau autorise les services requis dans la mesure où ils sont compatibles avec la souscription de l'utilisateur auprès de l'opérateur du réseau, et l'utilisateur est informé de ce que le réseau a autorisé.

Cependant, lorsqu'un réseau-opérateur accepte de fournir un tel service, il ne tient pas compte d'éventuelles limitations techniques que pourraient apporter ce réseau-opérateur lui-même, ou, le cas échéant, des réseaux intermédiaires entre lui et le dispositif-client de l'utilisateur, de sorte que, dans des cas de figure défavorables, le service ne sera finalement pas fourni à l'utilisateur malgré l'autorisation donnée par le réseau-opérateur.

Inversement, dans le cas spécifique des accès mobiles normalisés par le 3GPP (« *3rd Generation Partnership Project* »), il est prévu (selon la norme 3GPP TS 23.401) que, lors de l'attachement radio, le réseau visité (c'est-à-dire le réseau utilisé à un instant donné par le dispositif-client pour assurer sa connectivité) indique spontanément au dispositif-client s'il est apte à fournir le service voix SIP/IMS (paramètre « *IMS voice over PS sessions* ») et les services d'urgence SIP/IMS (paramètre « *Emergency Service Support* »). Mais ces dispositions sont limitées aux services que l'on vient de mentionner, alors que l'utilisateur du dispositif-client pourrait souhaiter savoir si certains autres services auxquels il s'intéresse particulièrement lui sont ou non accessibles.

Toujours dans le cas des accès mobiles, l'opérateur de l'utilisateur peut également, selon la norme 3GPP TS 24.167, configurer les services qu'il offre et/ou autorise *dans le dispositif-client.* Mais ceci est par définition une disposition statique : une mise à jour de ces informations session d'enregistrement par session d'enregistrement serait excessivement lourde à mettre en œuvre ; de plus, elle suppose le déploiement d'une infrastructure de configuration, ce qui n'est pas garanti. Surtout, cette liste de services ne tient pas compte des éventuelles limitations que pourrait apporter l'existence de réseaux intermédiaires.

Le document 3GPP TS 23.228, v10.6.0, octobre 2011, intitulé « Diigital cellular telecommunications system (Phase 2+) ; Universal Mobile Telecommunications System (UMTS) ; LTE ; IP Multimedia Subsystem (IMS) ; Stage 2 », décrit des fonctions de contrôle de bordure pouvant être appliquées entre plusieurs réseaux IMS ou basés sur le protocole SIP.

Il apparaît, en conclusion, que ces techniques connues, même combinées entre elles, ne sont pas aptes à résoudre le problème dans sa généralité. Notamment, elles ne permettent pas de prendre en compte les restrictions apportées par l'utilisation d'un réseau intermédiaire qui serait techniquement incapable de fournir certains services, ou qui n'autoriserait pas certains services, et ne permettent donc pas à un réseau-opérateur de savoir quels services il peut effectivement fournir à un dispositif-client appartenant à ce réseau-opérateur, parmi les services souhaités par l'utilisateur de ce dispositif-client.

La présente invention concerne donc un procédé de détermination d'une liste de services pour l'utilisateur d'un dispositif-client appartenant à un réseau-opérateur, ledit réseau-opérateur mettant en œuvre le protocole de contrôle de session SIP. Ledit procédé est remarquable en ce qu'il comprend les étapes suivantes :
- ledit dispositif-client insère dans une requête d'enregistrement auprès du réseau-opérateur une liste de services qu'il a les moyens techniques de fournir,
- le cas échéant, chaque réseau intermédiaire utilisé pour mettre en relation le dispositif client avec le réseau-opérateur transmet ladite requête d'enregistrement vers ledit réseau-opérateur après y avoir ajouté, dans ladite liste de services, une indication comprenant son identifiant de réseau et tous les services que ledit réseau intermédiaire n'a pas les moyens techniques de fournir et/ou pour lesquels le réseau intermédiaire ne possède pas d'accord d'usage avec l'opérateur du réseau amont et/ou aval auquel il est connecté, et
- le réseau-opérateur obtient une liste, dite liste définitive, en extrayant de la liste de services contenue dans la requête d'enregistrement reçue ceux d'entre eux auxquels l'utilisateur du dispositif-client a droit, compte tenu de sa souscription auprès du réseau-opérateur, parmi les services que le réseau-opérateur a les moyens techniques de fournir.

Ainsi, la présente invention propose la transmission, lors d'une requête d'enregistrement, de la liste des services disponibles entre un dispositif-client et son réseau-opérateur, et la modification de cette liste, le cas échéant, par les différents réseaux SIP traversés. Le réseau-opérateur peut ainsi prendre connaissance de l'ensemble des services effectivement disponibles et autorisés de bout en bout.

Selon des caractéristiques particulières, ledit procédé comprend ensuite les étapes suivantes :
- ledit réseau-opérateur insère ladite liste définitive dans une réponse à ladite requête d'enregistrement, et
- ladite réponse est transmise sans modification de la liste définitive audit dispositif-client *via,* le cas échéant, lesdits réseaux intermédiaires.

Grâce à ces dispositions, l'utilisateur du dispositif-client et, le cas échéant, les réseaux intermédiaires, peuvent eux aussi prendre connaissance de la liste des services auxquels cet utilisateur peut effectivement accéder. Ainsi, lors d'une requête de service subséquente (par exemple une requête de type SIP INVITE ou SIP SUBSCRIBE), l'utilisateur du dispositif-client se limitera avantageusement à demander la fourniture de services choisis parmi ceux auxquels il peut effectivement accéder.

Corrélativement, l'invention concerne un dispositif de détermination d'une liste de services dans un réseau SIP, dit premier réseau, caractérisé en ce qu'il possède des moyens pour :
- recevoir, de la part d'un dispositif-client ou d'un réseau SIP, dit deuxième réseau, auquel ledit premier réseau est connecté, une requête d'enregistrement auprès du réseau-opérateur dudit dispositif-client contenant une liste de services, et
- modifier ladite liste de services en y ajoutant, le cas échéant, un identifiant du premier réseau et tous les services que ledit premier réseau n'a pas les moyens techniques de fournir et/ou pour lesquels les opérateurs du premier réseau et dudit deuxième réseau n'ont pas établi d'accord d'usage mutuel.

Selon des caractéristiques particulières, ledit dispositif possède en outre des moyens pour transmettre à un réseau SIP, dit troisième réseau, auquel ledit premier réseau est connecté, ladite requête d'enregistrement après y avoir indiqué dans ladite liste modifiée, le cas échéant, tous les services pour lesquels les opérateurs du premier réseau et dudit troisième réseau n'ont pas établi d'accord d'usage mutuel.

Selon un autre aspect, l'invention concerne un serveur de commande de session comprenant un dispositif tel qu'exposé succinctement ci-dessus. Selon le même aspect, l'invention concerne un serveur d'interconnexion comprenant un dispositif tel qu'exposé succinctement ci-dessus.

Les avantages offerts par ces dispositifs et ces serveurs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de détermination d'une liste de services succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, déjà décrite, représente les services accessibles, selon l'état de l'art, à un utilisateur connecté à son réseau-opérateur *via* deux réseaux intermédiaires,
- la figure 2 représente schématiquement la structure d'un réseau IMS, et
- la figure 3 représente, selon un mode de réalisation de l'invention, un procédé de détermination des services effectivement accessibles à un utilisateur connecté à son réseau-opérateur *via* deux réseaux intermédiaires.

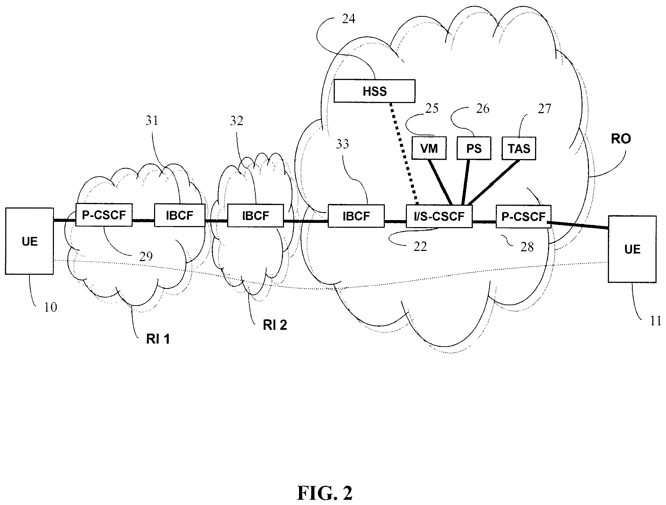

Bien que la présente invention concerne les réseaux SIP en général, on va considérer à présent, à titre d'exemple de réalisation, une architecture de réseau de type IMS, telle que présentée succinctement ci-dessus. Cette architecture est illustrée sur la **figure 2****.**

Les services multimédia offerts par ce réseau IMS RO peuvent par exemple comprendre des services de téléphonie, de vidéo-téléphonie, de partage de contenu (« *content-sharing* » en anglais), de présence, de messagerie instantanée, ou de télévision. Ces services sont à la disposition de l'utilisateur d'un dispositif-client UE 10, qui peut échanger à travers ce réseau RO des flux multimédias et des signaux de contrôle de session conformes au protocole SIP, notamment avec un autre dispositif-client UE 11, les dispositifs-clients 10 et 11 s'étant au préalable enregistrés auprès du réseau RO.

Le dispositif-client 10, 11 peut être un terminal fixe ou mobile, ou une passerelle domestique ou d'entreprise, ou encore un logiciel sur un PC ou sur un *smartphone,* disposant de moyens de signalisation SIP et pouvant comprendre des moyens de restitution d'un contenu audiovisuel.

Comme le montre la figure 2, ce système de fourniture de services multimédia s'appuie sur un réseau RO conforme à l'architecture IMS définie au 3GPP, et qui comprend :
- une infrastructure de transport IP (non représentée) ;
- un ou plusieurs serveurs d'appel I/S-CSCF (pour la combinaison d'une fonction « *Interrogating-Call Server Control Function* » et d'une fonction « *Serving-Call Server Control Function* » dans le même serveur) ; un serveur d'appel I/S-CSCF 22 gère notamment la procédure d'enregistrement des dispositifs connectés au réseau RO ; en effet, pour qu'un tel dispositif puisse bénéficier des services fournis par ce réseau, ce dispositif doit, sauf exceptions (cas de certains appels d'urgence) s'enregistrer auprès du serveur I/S-CSCF 22 ; le serveur I/S-CSCF 22 gère également le routage de la signalisation entre le dispositif-client 10 et les serveurs de messagerie vocale VM 25, de présence PS 26 et de téléphonie TAS 27, ainsi que le routage en direction d'autres terminaux gérés par le même réseau IMS (comme par exemple le dispositif-client 11) et le routage de la signalisation entre ce réseau IMS RO et d'autres réseaux (non-représentés) ;
- un (ou plusieurs) serveur(s) P-CSCF (pour « *Proxy* - *Call Session Control Function* » signifiant « Fonction de Commande de Session d'Appel Proxy ») ; le serveur P-CSCF 28 est le point de contact SIP du dispositif-client 11 dans le réseau IMS RO ; ainsi, toute la signalisation SIP échangée entre le dispositif-client 11 et le serveur d'appel I/S-CSCF 22 passe par ce serveur P-CSCF 28 ;
- un ou plusieurs serveurs de base de données de type HSS, mentionné ci-dessus ; un serveur HSS 24 contient le profil de l'utilisateur du dispositif-client 10 en termes de données d'authentification, de localisation et de services souscrits ;
- un (ou plusieurs) serveur(s) IBCF 33 ; comme mentionné ci-dessus, le serveur IBCF 33 est situé à la bordure du réseau IMS, et met en œuvre les traitements spécifiques nécessaires, le cas échéant, pour réaliser une interconnexion (non représentée) avec un autre réseau SIP ;
- un (ou plusieurs) serveur(s) de messagerie vocale VM 25 ; le serveur VM 25 permet le dépôt d'un message vocal par un appelant tel que le dispositif-client 11, lorsque le dispositif-client 10 appelé ne peut prendre l'appel ;
- un (ou plusieurs) serveur(s) de présence PS 26 ; le serveur PS 26 gère la souscription du dispositif-client 10 aux événements de présence que l'utilisateur de ce terminal souhaite surveiller, et notifie le terminal lors de l'occurrence de ces événements ; et
- un (ou plusieurs) serveur(s) de téléphonie TAS 27 ; un serveur TAS gère les services téléphoniques auxquels l'utilisateur du dispositif-client 10 a souscrits auprès de son opérateur, tels que la présentation du numéro ou le renvoi d'appel.

Les serveurs de messagerie vocale VM 25, les serveurs de présence PS 26 et les serveurs de téléphonie TAS 27 sont des exemples de ce que l'on appelle des « serveurs d'applications » (« *application servers* » ou AS en anglais).

La présente invention concerne un réseau-opérateur SIP RO et, le cas échéant, le ou les réseau(x) intermédiaire(s) SIP (RI 1, RI2, et ainsi de suite) traversé(s) par une requête d'enregistrement émise par un dispositif-client 10 à destination du réseau-opérateur RO auquel ce dispositif-client 10 appartient. Au moins l'un de ces réseaux pourra avantageusement être un réseau de type IMS.

On va décrire à présent, en référence à la figure 2 et à la figure 3, un mode de réalisation de l'invention. On a représenté sur cette figure 3 une situation analogue à celle décrite ci-dessus en référence à la figure 1, et l'on utilisera ci-dessous des notations analogues.

Lors d'une étape E1, un dispositif-client T, 10 initie une procédure d'enregistrement auprès de son réseau-opérateur RO. Pour ce faire, il émet une requête d'enregistrement SIP REGISTER, et il y insère une liste de services qu'il a les moyens de fournir (et que l'utilisateur U du dispositif-client T, 10 souhaite pouvoir utiliser tant qu'il restera enregistré).

Lors d'une étape E2, cette requête d'enregistrement est reçue dans un réseau intermédiaire RI 1 par un P-CSCF 29, qui dans un exemple illustratif peut supprimer dans ladite liste les services que le réseau RI 1 n'a pas les moyens techniques de fournir (la liste des services que le réseau RI 1 a les moyens de fournir pouvant par exemple être configurée statiquement dans tous les serveurs P-CSCF du réseau RI 1) ; selon l'invention, le réseau intermédiaire RI 1 préserve la liste reçue, mais y ajoute une indication comprenant son identifiant de réseau et ceux des services avec lesquels il n'est pas compatible ; cette seconde variante (en supposant qu'elle soit appliquée par tous les réseaux-intermédiaires) permet au réseau-opérateur RO d'avoir connaissance de la liste initiale demandée par le dispositif-client et de déterminer quel réseau intermédiaire particulier est à l'origine d'une restriction particulière. Puis le serveur P-CSCF 29 transmet la requête à un IBCF 31 du réseau RI 1 assurant l'interconnexion avec un réseau intermédiaire RI 2 permettant de joindre le réseau-opérateur RO. Cet IBCF 31 peut à son tour modifier la liste en fonction des services négociés avec RI 2, par exemple en se référant à une table donnant, pour chaque réseau interconnecté, la liste des services autorisés.

Lors d'une étape E3, un serveur IBCF 32 (ou plusieurs serveurs IBCF) du réseau RI 2 réitère(nt) ces mêmes opérations en fonction des services que le réseau RI 2 a les moyens de fournir, des services négociés avec le réseau RI 1 et des services négociés avec RO, avant de transmettre la requête à un serveur IBCF 33 du réseau RO. Ce serveur IBCF 33 peut à son tour modifier la liste reçue en fonction des accords d'interconnexion entre RO et RI 2, avant de transmettre la requête à un serveur I-CSCF de RO.

Lors d'une étape E4, ce serveur I-CSCF, au moyen de l'interrogation du HSS 24, sélectionne le S-CSCF qui va gérer l'enregistrement du dispositif-client T. Ce S-CSCF modifie à son tour la liste en fonction des services que le réseau-opérateur RO a les moyens techniques de fournir. Enfin, le réseau-opérateur RO obtient une liste, dite liste définitive, en extrayant de la liste de services ainsi obtenue ceux d'entre eux auxquels l'utilisateur U du dispositif-client T, 10 a droit compte tenu de sa souscription auprès du réseau-opérateur RO.

Lors d'une étape E5, le réseau-opérateur RO insère cette liste définitive dans une réponse 200 OK à la requête REGISTER.

Lors des étapes E6 et E7, cette réponse 200 OK est transmise, sans modification de la liste définitive, au dispositif-client T, 10 *via* les réseaux intermédiaires RI2, puis RI1.

Somme toute, l'ensemble des étapes E1 à E4 permet au réseau-opérateur RO d'acquérir, au sein de la liste des services que le dispositif-client T, 10 a les moyens techniques de fournir, ceux qui sont en outre compatibles avec les réseaux intermédiaires. L'ensemble des étapes E5 à E7 permet au dispositif-client T, 10, et éventuellement aux réseaux intermédiaires, de découvrir eux aussi la liste des services effectivement accessibles à cet utilisateur U tant qu'il restera enregistré.

Selon des caractéristiques particulières, on peut, pour mettre en œuvre la présente invention, étendre l'utilisation, définie par le 3GPP, des identifiants de services IMS appelés « *IMS Communication Service Identifiers* » (ICSI). Selon la norme 3GPP, ces identifiants de services sont insérés par un dispositif-client dans une requête SIP en tant que paramètres associés à l'adresse du dispositif-client, et sont véhiculés sans modification jusqu'au réseau-opérateur, qui les réinsère inchangés dans sa réponse 200 OK. L'extension selon la présente invention consiste à permettre l'intervention des réseaux intermédiaires sur cette liste d'identifiants de services, et à prévoir que le réseau-opérateur RO renvoie au dispositif-client T, 10 la liste des services auxquels ce dernier peut effectivement accéder.

Selon d'autres caractéristiques particulières, on définit de nouveaux en-têtes SIP dédiés à la détermination d'une liste de services selon l'invention (cette liste pouvant, en particulier, prendre la forme d'une liste d'identifiants ICSI) ; nous désignerons ci-après ces nouveaux en-têtes SIP par « P-Requested-Services » et « P-Supported-Services ». Dans ce cas, par exemple dans le mode de réalisation décrit ci-dessus :
- le dispositif-client T, 10 insère un en-tête P-Requested-Services dans la requête SIP REGISTER avec la liste des services qu'il a les moyens techniques de fournir ;
- chaque réseau intermédiaire RI1, RI 2 relaie cet en-tête en y indiquant les identifiants des services non compatibles (en raison d'une inaptitude technique ou d'une absence d'accords *ad hoc*) ;
- le réseau-opérateur RO compare la liste reçue à la liste des services auquel le dispositif-client T, 10 a droit parmi les services que le réseau-opérateur RO a les moyens de fournir, et retourne le sous-ensemble commun au moyen de l'en-tête P-Supported-Services du 200 OK REGISTER ; et
- les réseaux intermédiaires RI1, RI 2 relaient cet en-tête sans le modifier.

L'invention peut être mise en œuvre au sein des nœuds, par exemple des serveurs de commande de session ou des serveurs d'interconnexion, de réseaux SIP, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de détermination d'une liste de services selon l'invention.

En effet, l'invention vise aussi un programme d'ordinateur téléchargeable depuis un réseau de communication comprenant des instructions pour l'exécution des étapes d'un procédé de détermination d'une liste de services selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de détermination d'une liste de services selon l'invention.

## Revendications

1. Procédé de détermination d'une liste de services pour l'utilisateur (U) d'un dispositif-client (T, 10) appartenant à un réseau-opérateur (RO), ledit réseau-opérateur (RO) mettant en œuvre le protocole de contrôle de session SIP, le procédé comprenant les étapes suivantes :
- ledit dispositif-client (T, 10) insère (E1) dans une requête d'enregistrement auprès du réseau-opérateur (RO) une liste de services qu'il a les moyens techniques de fournir,
- le cas échéant, chaque réseau intermédiaire (RI1, RI2) utilisé pour mettre en relation le dispositif client (T, 10) avec le réseau-opérateur (RO) transmet (E2, E3) ladite requête d'enregistrement vers ledit réseau-opérateur (RO) après y avoir ajouté, dans ladite liste de services, une indication comprenant son identifiant de réseau et tous les services que ledit réseau intermédiaire (RI1, RI2) n'a pas les moyens techniques de fournir et/ou pour lesquels le réseau intermédiaire (RI1, RI2) ne possède pas d'accord d'usage avec l'opérateur du réseau amont et/ou aval auquel il est connecté, et
- le réseau-opérateur (RO) obtient une liste, dite liste définitive, en extrayant (E4) de la liste de services contenue dans la requête d'enregistrement reçue ceux d'entre eux auxquels l'utilisateur (U) du dispositif-client (T, 10) a droit, compte tenu de sa souscription auprès du réseau-opérateur (RO), parmi les services que le réseau-opérateur (RO) a les moyens techniques de fournir.

2. Procédé de détermination d'une liste de services selon la revendication 1, **caractérisé en ce que** ladite liste de services est insérée dans un en-tête SIP dédié (P-Requested-Services).

3. Procédé de détermination d'une liste de services selon la revendication 1 ou la revendication 2, **caractérisé en ce qu'**il comprend ensuite les étapes suivantes :
- ledit réseau-opérateur (RO) insère (E5) ladite liste définitive dans une réponse à ladite requête d'enregistrement, et
- ladite réponse est transmise (E6, E7) sans modification de la liste définitive audit dispositif-client (T, 10) *via,* le cas échéant, lesdits réseaux intermédiaires (RI2, RI1).

4. Procédé de détermination d'une liste de services selon la revendication 3, **caractérisé en ce que** ladite liste définitive est insérée dans un en-tête SIP dédié (P-Supported-Services).

5. Procédé de détermination d'une liste de services selon l'une quelconque des revendications 1 à 4, **caractérisé en ce que** ladite liste de services est constituée par une liste d'identifiants de services « *IMS Communication Service Identifiers* » (ICSI).

6. Procédé de détermination d'une liste de services selon l'une quelconque des revendications 1 à 5, **caractérisé en ce que** ledit réseau-opérateur (RO) est un réseau IMS.

7. Dispositif de détermination d'une liste de services dans un réseau SIP, dit premier réseau, le dispositif possédant des moyens pour :
- recevoir, de la part d'un dispositif-client (T, 10) ou d'un réseau SIP, dit deuxième réseau, auquel ledit premier réseau est connecté, une requête d'enregistrement auprès du réseau-opérateur (RO) dudit dispositif-client (T, 10) contenant une liste de services, et
- modifier ladite liste de services en y ajoutant, le cas échéant, un identifiant du premier réseau et tous les services que ledit premier réseau n'a pas les moyens techniques de fournir et/ou pour lesquels les opérateurs du premier réseau et dudit deuxième réseau n'ont pas établi d'accord d'usage mutuel.

8. Dispositif de détermination d'une liste de services selon la revendication 7, **caractérisé en ce qu'**il possède en outre des moyens pour transmettre à un réseau SIP, dit troisième réseau, auquel ledit premier réseau est connecté, ladite requête d'enregistrement après y avoir indiqué dans ladite liste modifiée, le cas échéant, tous les services pour lesquels les opérateurs du premier réseau et dudit troisième réseau n'ont pas établi d'accord d'usage mutuel.

9. Dispositif de détermination d'une liste de services selon la revendication 7 ou la revendication 8, **caractérisé en ce que** ledit premier réseau est un réseau IMS.

10. Serveur de commande de session (P-CSCF, S-CSCF), **caractérisé en ce qu'**il comprend un dispositif selon l'une quelconque des revendications 7 à 9.

11. Serveur d'interconnexion (IBCF, SBC, ISBC), **caractérisé en ce qu'**il comprend un dispositif selon l'une quelconque des revendications 7 à 9.

12. Moyen de stockage de données inamovible, ou partiellement ou totalement amovible, comportant des instructions de code de programme informatique pour l'exécution des étapes d'un procédé de détermination d'une liste de services selon l'une quelconque des revendications 1 à 6.

13. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de détermination d'une liste de services selon l'une quelconque des revendications 1 à 6, lorsqu'il est exécuté sur un ordinateur.

## Patentansprüche

1. Verfahren zur Bestimmung einer Liste mit Diensten für den Benutzer (U) einer Client-Vorrichtung (T, 10), die zu einem Betreibernetz (RO) gehört, wobei das Betreibernetz (RO) das SIP-Sitzungssteuerungsprotokoll implementiert, das Verfahren umfassend die folgenden Schritte:
- die Client-Vorrichtung (T, 10) fügt (E1) eine Liste mit Diensten, für deren Bereitstellung sie die technischen Mittel aufweist, in eine Anforderung zur Registrierung beim Betreibernetz (RO) ein,
- gegebenenfalls überträgt (E2, E3) jedes Zwischennetz (RI1, RI2), das zum Inverbindungbringen der Client-Vorrichtung (T, 10) mit dem Betreibernetz (RO) genutzt wird, die Registrierungsanforderung zum Betreibernetz (RO), nachdem es ihr in der Liste mit Diensten eine Angabe hinzugefügt hat, die seine Netzkennung und all die Dienste umfassen, für wessen Bereitstellung das Zwischennetz (RI1, RI2) nicht die technischen Mittel aufweist, und/oder für welche das Zwischennetz (RI1, RI2) keine Nutzungsvereinbarung mit dem Betreiber des stromauf- oder abwärtigen Netzes, mit dem es verbunden ist, aufweist, und
- das Betreibernetz (RO) bezieht eine Liste, die endgültige Liste, durch Extrahieren (E4) aus der Liste mit Diensten, die in der Registrierungsanforderung enthalten ist, derjenigen von ihnen, zu denen der Benutzer (U) der Client-Vorrichtung (T, 10) berechtigt ist, unter Berücksichtigung seiner Teilnahme am Betreibernetz (RO), von den Diensten, für wessen Bereitstellung das Betreibernetz (RO) die technischen Mittel aufweist.

2. Verfahren zur Bestimmung einer Liste mit Diensten nach Anspruch 1, **dadurch gekennzeichnet, dass** die Liste mit Diensten in einen dedizierten SIP-Header eingefügt wird (P-Requested-Services).

3. Verfahren zur Bestimmung einer Liste mit Diensten nach Anspruch 1 oder 2, **dadurch gekennzeichnet, dass** es anschließend die folgenden Schritte umfasst:
- das Betreibernetz (RO) fügt (E5) die endgültige Liste in eine Antwort auf die Registrierungsanforderung ein, und
- die Antwort wird ohne Änderung der endgültigen Liste an die Client-Vorrichtung (T, 10) übertragen (E6, E7), gegebenenfalls über die Zwischennetze (RI2, RI1).

4. Verfahren zur Bestimmung einer Liste mit Diensten nach Anspruch 3, **dadurch gekennzeichnet, dass** die endgültige Liste in einen dedizierten SIP-Header eingefügt wird (P-Supported-Services).

5. Verfahren zur Bestimmung einer Liste mit Diensten nach einem der Ansprüche 1 bis 4, **dadurch gekennzeichnet, dass** die Liste mit Diensten von einer Liste mit Kennungen von Diensten "IMS Communication Service Identifiers" (ICSI) gebildet ist.

6. Verfahren zur Bestimmung einer Liste mit Diensten nach einem der Ansprüche 1 bis 5, **dadurch gekennzeichnet, dass** das Betreibernetz (RO) ein IMS-Netz ist.

7. Vorrichtung zur Bestimmung einer Liste mit Diensten in einem SIP-Netz, dem ersten Netz, wobei die Vorrichtung Mittel aufweist, um:
- von einer Client-Vorrichtung (T, 10) oder einem SIP-Netz, dem zweiten Netz, mit dem das erste Netz verbunden ist, eine Anforderung zur Registrierung beim Betreibernetz (RO) der Client-Vorrichtung (T, 10), die eine Liste mit Diensten enthält, zu empfangen, und
- die Liste mit Diensten zu verändern, indem ihr gegebenenfalls eine Kennung des ersten Netzes und aller Dienste hinzugefügt wird, für wessen Bereitstellung das erste Netz nicht die technischen Mittel aufweist, und/oder für welche die Betreiber des ersten Netzes und des zweiten Netzes keine gegenseitige Nutzungsvereinbarung getroffen haben.

8. Vorrichtung zur Bestimmung einer Liste mit Diensten nach Anspruch 7, **dadurch gekennzeichnet, dass** sie ferner Mittel zum Übertragen der Registrierungsanforderung an ein SIP-Netz, das dritte Netz, aufweist, mit dem das erste Netz verbunden ist, nachdem darin in der veränderten Liste gegebenenfalls all die Dienste angegeben wurden, für welche die Betreiber des ersten Netzes und des dritten Netzes keine gegenseitige Nutzungsvereinbarung getroffen haben.

9. Vorrichtung zur Bestimmung einer Liste mit Diensten nach Anspruch 7 oder 8, **dadurch gekennzeichnet, dass** das erste Netz ein IMS-Netz ist.

10. Sitzungssteuerungsserver (P-CSCF, S-CSCF), **dadurch gekennzeichnet, dass** er eine Vorrichtung nach einem der Ansprüche 7 bis 9 umfasst.

11. Verbindungsserver (IBCF, SBC, ISBC), **dadurch gekennzeichnet, dass** er eine Vorrichtung nach einem der Ansprüche 7 bis 9 umfasst.

12. Nicht oder teilweise oder vollständig entfernbares Datenspeichermittel, aufweisend Computerprogrammcode-Anweisungen zur Ausführung der Schritte eines Verfahrens zur Bestimmung einer Liste mit Diensten nach einem der Ansprüche 1 bis 6.

13. Computerprogramm, das aus einem Kommunikationsnetzwerk herunterladbar ist und/oder auf einem computerlesbaren Datenträger gespeichert ist und/oder von einem Mikroprozessor ausführbar ist, **dadurch gekennzeichnet, dass** es Anweisungen zur Ausführung der Schritte eines Verfahrens zur Bestimmung einer Liste mit Diensten nach einem der Ansprüche 1 bis 6, wenn es auf einem Computer ausgeführt wird, umfasst.

## Claims

1. Method for determining a list of services for the user (U) of a customer device (T, 10) belonging to an operator network (RO), said operator network (RO) implementing the session control protocol SIP, the method comprising the following steps:
- said customer device (T, 10) inserts (E1) a list of services that it has the technical means to provide into a request for registration with the operator network (RO),
- where appropriate, each intermediate network (RI1, RI2) used for relating the customer device (T, 10) to the operator network (RO) transmits (E2, E3) said request for registration to said operator network (RO) after having added thereto, in said list of services, an indication comprising its network identifier and all the services that said intermediate network (RI1, RI2) does not have the technical means to provide and/or for which the intermediate network (RI1, RI2) does not have a use agreement with the operator of the upstream and/or downstream network to which it is connected, and
- the operator network (RO) obtains a list, called a definitive list, by extracting (E4) from the list of services that is contained in the received request for registration those among them to which the user (U) of the customer device (T, 10) is entitled, taking account of his subscription to the operator network (RO), among the services that the operator network (RO) has the technical means to provide.

2. Method for determining a list of services according to Claim 1, **characterized in that** said list of services is inserted into a dedicated SIP header (P-Requested-Services).

3. Method for determining a list of services according to Claim 1 or Claim 2, **characterized in that** it then comprises the following steps:
- said operator network (RO) inserts (E5) said definitive list into a response to said request for registration, and
- said response is transmitted (E6, E7), without modification of the definitive list, to said customer device (T, 10) *via*, where appropriate, said intermediate networks (RI2, RI1).

4. Method for determining a list of services according to Claim 3, **characterized in that** said definitive list is inserted into a dedicated SIP header (P-Supported-Services).

5. Method for determining a list of services according to any one of Claims 1 to 4, **characterized in that** said list of services is constituted by a list of service identifiers "*IMS Communication Service Identifiers"* (ICSI).

6. Method for determining a list of services according to any one of Claims 1 to 5, **characterized in that** said operator network (RO) is an IMS network.

7. Device for determining a list of services in an SIP network, called the first network, the device having means for:
- receiving, from a customer device (T, 10) or from an SIP network, called the second network, to which said first network is connected, a request for registration with the operator network (RO) of said customer device (T, 10) containing a list of services, and
- modifying said list of services by adding thereto, where appropriate, an identifier of the first network and all the services that said first network does not have the technical means to provide and/or for which the operators of the first network and said second network have not set up a mutual use agreement.

8. Device for determining a list of services according to Claim 7, **characterized in that** it furthermore has means for transmitting to an SIP network, called the third network, to which said first network is connected, said request for registration after having indicated therein in said modified list, where appropriate, all of the services for which the operators of the first network and said third network have not set up a mutual use agreement.

9. Device for determining a list of services according to Claim 7 or Claim 8, **characterized in that** said first network is an IMS network.

10. Session control server (P-CSCF, S-CSCF), **characterized in that** it comprises a device according to any one of Claims 7 to 9.

11. Interconnection server (IBCF, SBC, ISBC), **characterized in that** it comprises a device according to any one of Claims 7 to 9.

12. Means for storing irremovable, or partially or totally removable, data, having computer program code instructions for executing the steps of a method for determining a list of services according to any one of Claims 1 to 6.

13. Computer program downloadable from a communication network and/or stored on a computer-readable medium and/or executable by a microprocessor, **characterized in that** it comprises instructions for executing the steps of a method for determining a list of services according to any one of Claims 1 to 6 when it is executed on a computer.
